# EUROPEAN PATENT SPECIFICATION

(11) **EP 1 961 551 B1**
(45) Date of publication and mention of the grant of the patent: **12.02.2014**
(21) Application number: 06834333.4
(22) Date of filing: 08.12.2006
(51) Int. Cl.: B29C 47/52, B29C 47/08, B29C 47/36, B29K 21/00, B29L 7/00

(54) **DEVICE FOR EXTRUDING A STRIP-SHAPED MEMBER**
VORRICHTUNG ZUM EXTRUDIERTEN VON BANDFÖRMIGEN TEILEN
DISPOSITIF POUR L'EXTRUSION D'UN ELEMENT EN FORME DE BANDE

(30) Priority: 16.12.2005 JP 2005362736
(43) Date of publication of application: 27.08.2008
(73) Proprietor: Bridgestone Corporation, Tokyo 104-8340 (JP)
(72) Inventor: UCHIDA, Yo, Kodaira-shi, Tokyo 187-8531 (JP)
(74) Representative: Waldren, Robin Michael
(86) International application number: PCT/JP2006/324578
(87) International publication number: WO 2007/069549

(56) References cited:
- EP-A- 0 897 063
- JP-A- 05 116 200
- JP-A- 11 099 555
- JP-A- 2001 150 515
- JP-A- 2003 062 891
- JP-A- 2005 053 073
- US-A1- 2005 186 301
- US-B1- 6 361 200

## Description

The present invention relates to a device for extruding a strip-shaped member by means of a gear pump extruder.

As a conventional method and device for extruding a strip-shaped member, there is known, for example, a technology disclosed in Japanese Patent Application Laid-Open No. 2001-150515.

This device is provided with a screw heater for forwardly flowing rubber composition while heating the composition by rotating its screw, and a gear pump extruder directly connected to a front end of the heater for extruding the heated rubber composition fed from the heater without any change (directly) to form the strip-shaped member.

Such device adjusts a rotation speed of the screw of the heater as well as that of a gear of the gear pump and pushes the rubber composition into the extruder (gear pump) by means of the heater, and keeps the composition therebetween pressurized in order to prevent the air from mixing in the extruded strip-shaped member.

Attention is also drawn to the disclosures of US 2005/186301 A; JP-11-099555 A; JP-2003-062891 A; US-6391200 A; EP-0897063 A; JP-2005-053073 A; and JP-05-116200.

However, when a gear pump extruder is directly connected to a front end of a screw heater as in the above-mentioned conventional method and device for extruding a strip-shaped member, a destination to which the rubber composition is extruded from a heater is a highly-pressurized area between the heater and the extruder, so that in a flow passage between a screw and a barrel in the heater as well as between the heater and the extruder (gear pump), a flow of the rubber composition arises by a back flow, retention, or pressure-reducing, thereby generating excess heat, which results in a significantly high temperature of the composition when extruded from a die. Here, if the temperature of the rubber composition at the time of extrusion is equal to or more than the vulcanization-initiating temperature, premature crosslinking occurs to the rubber composition (strip-shaped member), so that the temperature of the composition is restricted to that slightly lower than the vulcanization-initiating temperature. As a result, although high-speed extrusion has been recently required to facilitate improvement in productivity, there exists an issue that the extrusion speed is limited to a value having the lower extrusion speed.

Especially when a rubber composition made up of high-viscosity rubber that tends to easily generate heat, or on the contrary rubber that generates less heat and thus has difficulty being evenly heated by means of the conventional extrusion method and device, is extruded by means of a conventional extruding method and device, a screw length of the heater is lengthened in order to perform necessary heating. However, when the screw length of the heater is lengthened in this way, the temperature of the rubber composition easily rises, especially in the former high-viscosity rubber, the temperature of the composition promptly rises up to the vulcanization-initiating temperature or more, so that the rotation speed of the screw in the heater needs to be significantly decreased, and accordingly the extrusion speed is limited to that having a further lowered value.

It is an object of the present invention to provide a device for extruding a strip-shaped member, capable of easily increasing an extrusion speed of the strip-shaped member from an extruder.

The invention provides a device for extruding a strip-shaped member as claimed in claim 1.

Particular embodiments of the invention are the subject of the dependent claims.

In the present invention, the unvulcanized rubber heated by the heater is extruded, at first, as the strip-shaped body and passes through the air, and then, is guided into the pushing means without any change to become shapeless, and thereafter the unvulcanized rubbe is extruded in the gear pump extruder by the pushing means as the strip-shaped member, so that the unvulcanized rubber is extruded from the heater at atmosphere pressure, which is lower than the pressure in a conventional technology, to be formed as the strip-shaped body. As a result, back flow, retention, or pressure-reducing as above-mentioned are not likely to occur in the unvulcanized rubber in the heater, thereby significantly lowering a temperature of the strip-shaped body extruded from the heater. Further, in this state, the strip-shaped body (unvulcanized rubber) is guided into the extruder through the pushing means, so that the temperature of the strip-shaped member (unvulcanized rubber) at the time of extrusion is also lowered more than that in the conventional technology.

Here, enhancing an extrusion speed in the extruder leads to an increase in the flow, friction resistance and the like, and accordingly results in a rise in the temperature of the strip-shaped member. However, even when the temperature of the strip-shaped member is risen up to that of the strip-shaped member in the conventional technology, any problem is not likely to occur, so that it is allowed to enhance, only by the amount corresponding to the above-mentioned lowered temperature, an operation speed of the heater, the pushing means, and the extruder, in other words to increase the extrusion speed in the extruder. Thus, use of the present invention allows to easily increase extrusion amount of the strip-shaped member per unit time from the extruder. The present invention is advantageous especially for high-viscosity rubber or one which is difficult to be warmed evenly.

The device constructed as described in claim 3 is a simple structure which is inexpensive to manufacture. Further, when the device is constructed as described in claim 4, rubber pressure between the pushing mechanism and the pusher is sufficiently high, and accordingly the unvulcanized rubber is surely filled in the gear in the pusher, and thus can be extruded in a fixed amount with high accuracy, and an amount of generated heat is considerably smaller than that in a screw-type one, so that the rubber can be extruded at a high speed. When constructed as described in claim 5, the device for extruding the strip-shaped member is small-sized and has a simple structure and can be inexpensively manufactured, and an arrangement of a pushing roller at one way thereof allows to further improve biting capability (pull-in capability), and thus, to stably push the unvulcanized rubber into the gear in the pusher, thereby improving the extrusion accuracy of the extruder.

Further, when the device is constructed as described in claim 6, an engagement gear pump is given a driving force due to an engagement of the engagement gear with the gear in the extruder, so that special driving means is not required for operating the engagement-type gear pump. When the device is constructed as described in claim 7, in a case where a type of the unvulcanized rubber to be extruded changes, the change can be easily handled by individually changing rotation speeds of the gear in the extruder, the feed rollers, and the pushing gear. Further, when constructed as described in claim 8, the device can be inexpensively manufactured and can save its installation space. Furthermore, when the device is constructed as described in claim 9, the temperature decrease of the strip-shaped body can be enlarged and the body can be prevented from fracturing between the heater and the pushing means. Also, the present invention is preferable for the unvulcanized rubber as described in claim 10.

The invention will be further described with reference to the accompanying drawings, wherein
FIG. 1 is a partially-broken front view showing a first example of the present invention.
FIG. 2 is an enlarged front cross-sectional view in the vicinity of an extruder, a pushing means.
FIG. 3 is a plan view of FIG. 2.
FIG. 4 is a cross-sectional view as viewed from a direction of Arrow I-I in FIG. 1.
FIG. 5 is an enlarged front cross-sectional view same as FIG. 2, showing a second example of the present invention.
FIG. 6 is a cross-sectional view as viewed from a direction of Arrow II-II in FIG. 5.
FIG. 7 is a cross-sectional view as viewed from a direction of Arrow III-III in FIG. 5.
FIG. 8 is a plan view same as FIG. 3, showing a third example of the present invention.
FIG. 9 is a schematic front view showing a fourth example of the present invention.
FIG. 10 is a schematic view showing a tire building apparatus using an extruding device for extruding a strip-shaped member, according to the present invention.
FIG. 11 is a schematic view showing a tire building apparatus using an extruding device for extruding a strip-shaped member, in a conventional technology.

Hereinafter, a first example of the present invention will be explained with reference to the drawings.

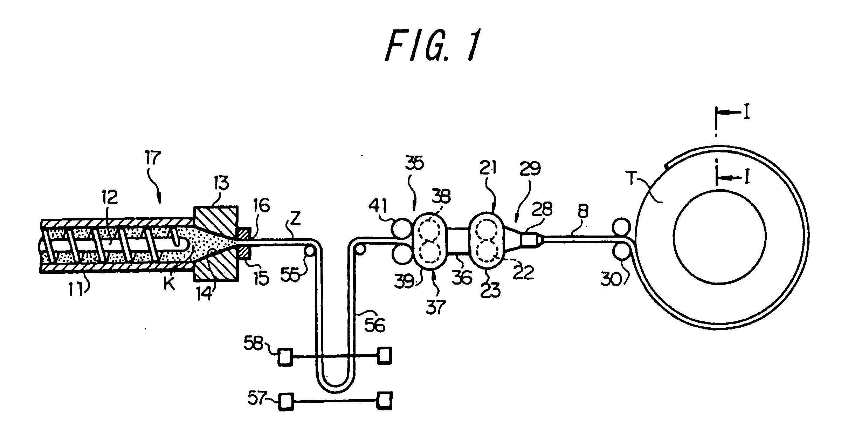

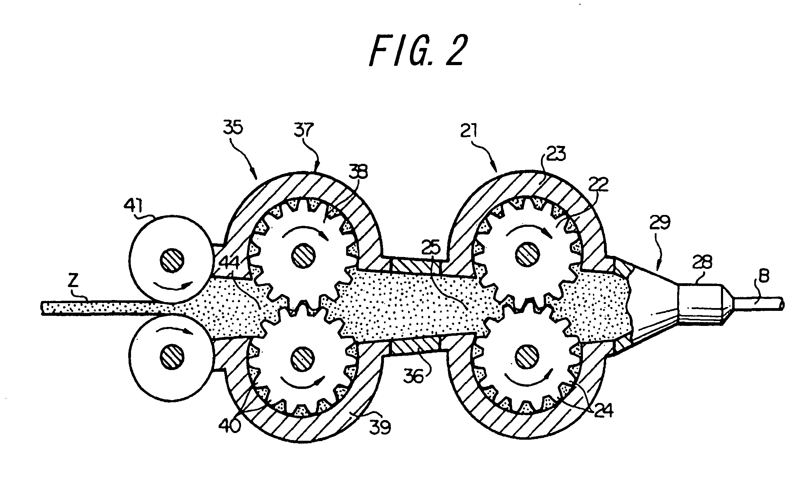

In FIGS. 1, 2 and 3, a generally cylindrically-shaped cylinder barrel 11 extends in a back-and-forth direction, and the cylinder barrel 11 accommodates therein a screw 12 that rotates in reaction to driving force from a driving motor (not shown). There is provided a hopper (not shown) for guiding sheet-like or pellet-like unvulcanized rubber K into the cylinder barrel 11 at a rear end portion of the cylinder barrel 11. The unvulcanized rubber K having a normal temperature (cold state) as well as being fed in the cylinder barrel 11 through the hopper flows forwardly while at the same time being heated through rotation of the screw 12. At this time, the unvulcanized rubber K generates heat due to flow deformation thereof and friction resistance with the cylinder barrel 11 and the screw 12, and accordingly its temperature rises.

At a front end (downstream end) of the cylinder barrel 11, there is fixed a head 13, there is formed a passage 14 in the head 13 through which the unvulcanized rubber K having flowed in the cylinder barrel 11 passes. A numeral reference "15" denotes a die fixed at the front end of the head 13. At the die 15, there is formed an extrusion opening 16 through which the unvulcanized rubber K heated to a considerable extent or generally evenly due to the rotation of the screw 12 is extruded temporarily as strip-shaped body Z. Here, the above-mentioned cylinder barrel 11, the driving motor, the screw 12, the head 13, and the die 15, in their entirety, heat the unvulcanized rubber K and constitute a screw heater that extrudes the rubber K as the strip-shaped body Z.

A gear pump extruder 21 for extruding a fixed amount is placed at a position in front of the heater 17and spaced apart therefrom, and has a case 23 that accommodates therein a pair of gears 22. The respective gears 22 have, at its outer circumference, a number of external teeth 24 that slidingly contact with an internal surface of the case 23, and the teeth 24 of the pair of gears 22 engage with each other. At a rear end portion (upstream end portion) of the case 23, there is formed a supply opening 25, and thereinto, the unvulcanized rubber K turned from the strip-shaped body Z into an shapeless state is fed from an upstream side and pushed by a pushing means that will be explained later.

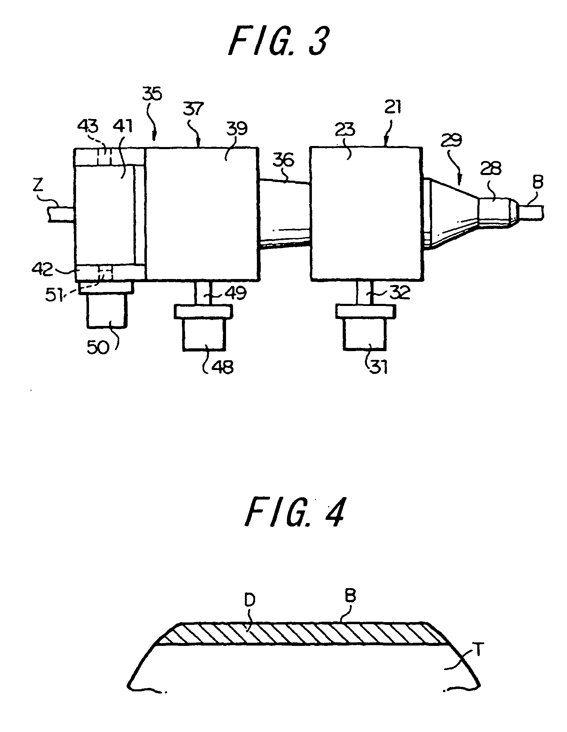

As a result, the unvulcanized rubber K fed into the supply opening 25 is charged between the external teeth 24 and the internal surface of the case 23 both being adjacent to each other, as well as transported forwardly (toward a downstream side) along an inner circumference of the case 23 due to the rotation of the gears 22. The gear pump extruder 21 has an extruding head 29 which is mounted to a front end of the case 23 and provided with a die 28 at a leading edge. The unvulcanized rubber K fed by the gears 22 is extruded from the die 28 as a strip-shaped member B having a predetermined cross-sectional shape, in this case, a rectangular cross-section. Then, the strip-shaped member B thus extruded is pushed by paste rollers 30 and spirally wound around an outer circumference of a rotating tire intermediate body T in the course of tire building, and for example a tread D is formed as shown in FIG. 4.

In the gear pump extruder 21, the amount of the unvulcanized rubber K per unit time relative to the die 28 is determined by a circumferential velocity of the external teeth 24, a spatial volume between the adjacent external teeth 24 and a pitch of the external teeth 24, so that when these are constant, the strip-shaped member B is extruded in a constant amount per unit time from the gear pump extruder 21. A motor 31 serves as a driving mechanism for applying driving force to the gear pump extruder 21. An output shaft of the motor 31 is connected to either one of the gears 22, in this case to the lower gear 22; drives to rotate the lower gear 22; and dependently rotates the upper gear 22 at a constant velocity in a direction opposite to that of the lower gear 22. The motor serving as the driving mechanism may drive to rotate only the upper gear 22 or both of the upper and lower gears 22.

A pushing means 35 is placed at the upstream side of the gear pump extruder 21 and in close contact therewith. This pushing means 35 has a pushing gear pump 37 of which a front end (downstream end) is connected to a rear end (upstream end) of the gear pump extruder 21 via a supply pipe 36 through which the unvulcanized rubber K in a shapeless state passes. The pushing gear pump 37 has a case 39 that accommodates therein paired gears 38, and the outer circumference of the respective gears 38 is provided with a number of external teeth 40 that slidingly contact with an internal surface of the case 39 and engage with each other.

The pushing means 35 further has a pair of feed rollers 41 that rotate at a constant velocity in opposite directions. A rotation shaft 43 is rotatably supported by a pair of brackets 42 provided at a rear end of the case 39, and accordingly the feed rollers 41 are arranged at a rear side of the gear pump 37, which places the pushing gear pump 37 between the gear pump extruder 21 and the feed rollers 41.

The rollers 41 and the heater 17 are spaced apart in the back-and-forth direction, so that when the feed rollers 41 rotate, the strip-shaped body Z in a heated state passes through the air between the heater 17, the pushing means 35 and the gear pump extruder 21, and then is pulled between the feed rollers 41 without any change (in a state extruded from the heater 17) to pass between the rollers 41, and thereafter pushed into a supply opening 44 formed at a rear end portion of the case 39 and the gears 38 as the unvulcanized rubber K while at the same time being pressurized and turned into the shapeless state.

This prevents the air from mixing into the supply opening 44, and results in sufficient charging of the unvulcanized rubber K into the pushing gear pump 37. In a case where the pushing means 35 including such feed rollers 41 is not arranged at the upstream side of the gear pump extruder 21 and the strip-shaped body Z is directly fed to the gears 22 in the gear pump extruder 21, the body Z may insufficiently engage with the gears 22, and the extruder 21 may not be able to extrude the fixed amount, and accordingly the air may mix thereinto.

In order for the feed rollers 41 to push the unvulanized rubber K into the pushing gear pump 37, given that the downstream side of the feed rollers 41 is not connected to the pushing gear pump 37 nor the gear pump extruder 21 and opens to the atmosphere, the amount of the fed rubber per unit time from the feed rollers 41 needs to be greater than the amount of the fed and extruded rubber per unit time from the pushing gear pump 37 and the gear pump extruder 21, respectively.

Thereafter, the shapeless unvalcanized rubber K fed to the supply opening 44 is charged between the adjacent external teeth 40 of the gears 38 and transported forwardly (toward the downstream side) along the inner circumference of the case 39 due to rotation of the gears 38, and then is pushed into the supply opening 25 of the gear pump extruder 21 through the supply pipe 36 with only a fixed amount of the rubber being pressurized. In order for the feed rollers 37 to push the unvulcanized rubber K into the gear pump extruder 21, given that the downstream side of the pushing gear pump 37 is not connected to the gear pump extruder 21 and opens to the atmosphere, the amount of fed rubber per a unit time from the pushing gear pump 37 needs to be greater than the amount of extruded rubber per unit time from the gear pump extruder 21.

When the pushing means 35, which pulls the strip-shaped body Z extruded from the heater 17 and having passed through the air and pushes the body Z into the gear pump extruder 21 as the shapeless unvulcanized rubber K, has the feed rollers 41 as well as the pushing gear pump 37, which is placed between the gear pump extruder 21 and the pair of feed rollers 41 and which pushes the unvulcanized rubber K having passed between the feed rollers 41 into the gear pump extruder 21, rubber pressure between the pushing gear pump 37 and the gear pump extruder 21 is high enough to ensure the unvulcanized rubber K to be charged to the gears 22 in the gear pump extruder 21, thereby enabling the extruder 21 to extrude the rubber K by the fixed amount. Further, since the amount of heat generated is considerably lower than that in a screw pushing means, the extrusion can be performed at a higher speed.

In addition, the unvulcanized rubber K is extruded under the atmosphere, which is lower than that in a conventional technology, to form the strip-shaped body Z as described above, so that the flow as described above arisen from a back flow, retention, or pressure-reducing is not likely to occur, and the temperature of the strip-shaped body Z extruded from the heater 17 considerably falls, for example by approximately 20 deg. C. Thereafter, the strip-shaped body Z (unvulcanized rubber K) sequentially passes between the feed rollers 41 and through the pushing gear pump 37. At this time, the unvulcanized rubber K has been evenly heated, which leads to high fluidity (low viscosity), and furthermore the back flow and the like is not likely to occur in the pushing gear pump 37, so that the temperature hardly rises. This results in lowering the temperature of the strip-shaped member B (the unvulcanized rubber K) at the time of being extruded from the gear pump extruder 21 significantly compared with that in the conventional technology, for example by approximately 10 to 20 deg. C.

Speeding up the extrusion speed in the gear pump extruder 21 leads to an increase in the flow, the friction resistance and the like mostly in the heater 17, thereby raising the temperature of the strip-shaped member B. However, even when the temperature of the strip-shaped member B is raised up to that of the strip-shaped member in the conventional technology, any problem is not likely to occur, so that it is allowed to speed up an operation speed of the heater 17, the pushing means 35, and the gear pump extruder 21 only by a degree corresponding to the above-mentioned lowered temperature, in other words to raise the extrusion speed at the time of extrusion. Thus, employing the present embodiment allows the amount of the strip-shaped member B extruded from the gear pump extruder 21 per unit time to be easily increased up to approximately 1.3 to 1.8 times compared with that in the conventional technology, when other conditions are the same.

The present example is advantageous especially for high-exothermicity and high-viscosity rubber such as natural rubber compounded with minute particles of carbon black, or rubber which is difficult to be evenly heated such as natural rubber having smaller amount of filler (filling agent such as carbon) and lower thermal conductivity. When the unvulcanized rubber K to be loaded into the heater 17 is high-viscosity rubber, rubber having Mooney viscosity ML1 + 4 (100 deg. C) within a range of 40 to 200 can be preferably used. It is noted that the above-mentioned Mooney viscosity ML1 + 4 is rubber viscosity measured in accordance with JIS (Japanese Industrial Standards) K6300.

A motor 48 serves as the driving mechanism for applying the driving force to the gear pump extruder 37. An output shaft 49 of the motor 48 is connected to either one of the gears 38, in this case to the lower gear 38; drives to rotate the lower gear 38; and dependently rotates the upper gear 38 at constant velocity in the direction opposite to the rotational direction of the lower gear 38. The motor serving as the driving mechanism may drive to rotate only the upper gear 38 or both of the upper and lower gears 38. Controlling the rotation velocity of the output shaft 49 of such motor 48 allows the pushing gear pump 37 to easily push the unvulcanized rubber K into the gear pump extruder 21.

To the rotation shaft 43 of the respective feed rollers 41, there is connected an output shaft 51 of a motor 50 serving as a driving mechanism. As a result, the pair of feed rollers 41 rotate in mutually opposite directions at constant velocity due to the driving force applied by the motor 50. Controlling the rotation velocity of the output shaft 51 of such motor 50 allows the feed rollers 41 to easily push the unvulcanized rubber K into the gear pump extruder 37.

In this way, given that the driving force is applied to the gear pump extruder 21, the pushing gear pump 37, and the feed rollers 41 from the respectively corresponding separate motors 31, 48, and 50, whereby these are driven, in a case where a type of the unvulcanized rubber K to be extruded changes, the change can be easily handled by individually adjusting the rotation speed of the gear pump extruder 21, the pushing gear pump 37, and the feed rollers 41.

A pair of parallel rollers 55 is provided between the heater 17 and the pushing means 35, more specifically the feed rollers 41, and these rollers 55 are rotatably supported by a not-shown frame. When the strip-shaped body Z extruded from the heater 17 is guided to the rollers 55, the body Z is stretched between the rollers 55 to form a festoon 56 having a predetermined length.

Lower-limit detecting sensors 57 are placed beneath the rollers 55. When a lower end of the festoon 56 descends to a descent limit, the lower-limit detecting sensors 57 detect the lower end and lower the extrusion speed of the strip-shaped Z extruded by the heater 17 or stops the extrusion. Upper-limit detecting sensors 58 are placed above the lower-limit detecting rollers 57. When the lower end of the festoon 56 ascends to an ascent limit, the upper-limit detecting sensors 58 detect the lower end and raise the extrusion speed of the strip-shaped body Z extruded by the heater 17. These constantly maintain the length of the festoon 56 within a predetermined range. A dancer roll may be used in order to control the festoon 56.

The festoon 56 may be maintained to the predetermined length by detecting the rotation speed of the respective feed rollers 41 and the gears 38 while at the same time, on the basis of the detected result, changing the extrusion speed of the strip-shaped body Z from the heater 17. When the festoon 56 having the predetermined length is provided to the strip-shaped body Z stretched between the heater 17 and the pushing means 35 as described above, the strip-shaped body Z can experience a huge drop in its temperature, and the strip-shaped body Z can be effectively prevented from fracturing between the heater 17 and the pushing means 35.

Next, an operation of the first example will be explained.

When an extruding device as mentioned above extrudes the unvulcanized rubber K as the strip-shaped member B, the unvulcanized rubber K having the normal temperature is firstly loaded into the heater 17 in which the screw 12 is rotating, and the screw 12 heats the unvulcanized rubber K, and then the rubber K flows forwardly (toward the leading edge) inside the cylinder barrel 11 while at the same time decreasing its apparent viscosity. Thereafter, the extruding device extrudes from an extrusion opening 16 the unvulcanized rubber K heated to a certain extent or generally evenly due to the rotation of the screw 12 temporarily as the strip-shaped body Z.

Next, the pair of feed rollers 41 (pushing means 35) pulls therein the strip-shaped body Z extruded from the heater 17 and having passed through the air without any change. At this time, the unvulcanized rubber K is extruded under atmospheric pressure lower than that in the conventional technology to form the strip-shaped body, so that the flow as found in the conventional technology, arisen from back flow, retention, or pressure-reducing, is not likely to occur, and there is considerably lowered the temperature of the strip-shaped body Z extruded from the heater 17. The strip-shaped body Z pulled between the feed rollers 41 is pushed in the gear pump extruder 37 as shapeless unvulcanized rubber K, after passing between the feed rollers 41.

Next, after being pushed in the gear pump extruder 21 only by the fixed amount via the supply pipe 36 due to the rotation of the gears 38, the unvulcanized rubber K is extruded from the die 28 due to the rotation of the gears 22 in the extruder 21, and accordingly the strip-shaped member B is formed.
At this time, the unvulcanized rubber K generates heat, and accordingly its temperature rises. However, the temperature rise is slight, so that the strip-shaped member B (unvulcanized rubber K) in the die 28 of the gear pump extruder 21 keeps its temperature considerably lowered compared with that in the conventional technology.

In this state, when the operation speeds of the heater 17, the pushing means 35, and the gear pump extruder 21 are raised, in other words the extrusion speed at the time of extrusion is raised to raise the temperature of the strip-shaped member B up to that of a strip-shaped member in the conventional technology, any problem is not likely to occur. As a result, the present example enables to easily raise the extrusion speed of the strip-shaped member B from the gear pump extruder 21.

Thereafter, the strip-shaped member B is spirally wound around the outer circumference of the tire intermediary T to form the tread D. At this time, the gear pump extruder 21 continuously extrudes the unvulcanized rubber having the predetermined amount with high accuracy, so that the cross-sectional shape of the strip-shaped member B is stabilized with high accuracy, and this makes it possible to manufacture a pneumatic tire having high roundness, and smaller fluctuation in mass.

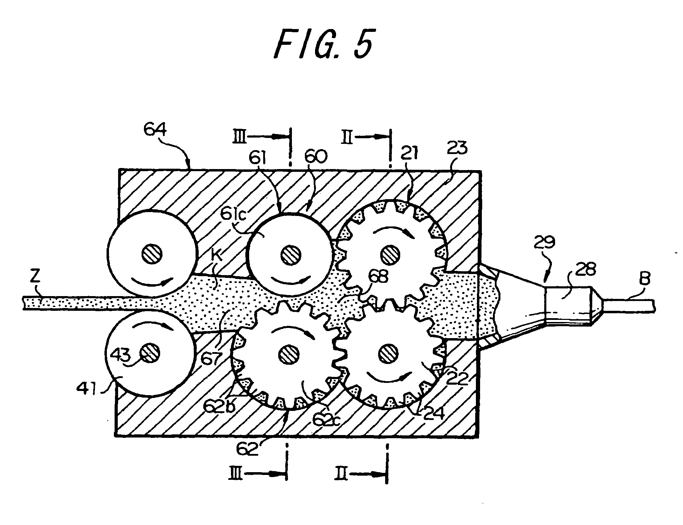

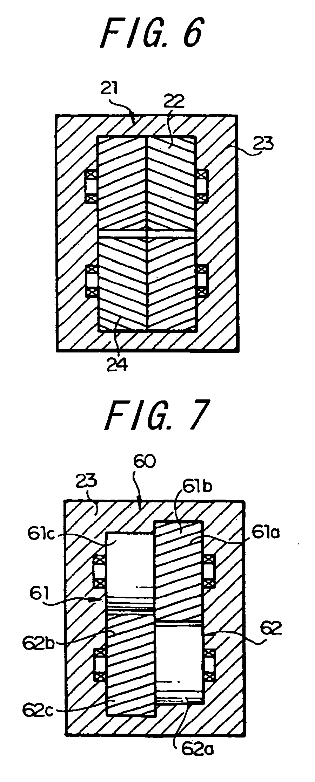

Each of FIGS. 5, 6, and 7 is a view showing a second embodiment of the present invention. The present example omits the supply pipe 36 as well as the pushing gear pump 37 connected to the gear pump extruder 21 via the supply pipe 36, and places an engagement-type pushing gear pump 60 in close contact with a rear side (at the upstream side) of the gear pump extruder 21. This engagement-type gear pump 60 is accommodated in the case 23, and has a pair of pushers 61, 62 that rotates at constant velocity as well as in mutually opposite directions. At one side in an axial direction of the upper pusher 61, there is provided an engagement gear 61b on which a number of external teeth 61 a in slidingly contact with the internal surface of the case 23 are formed, the external teeth 61 a of the engagement gear 61 b being engaged with the external teeth 24 of the one of the gears 22 (in this case, the upper one) in the gear pump extruder 21.

Meanwhile, at one side in the axial direction of the lower pusher 62, there is provided a pushing roller 62a of which the outer circumference is constructed of a smooth circumferential surface and which has a diameter smaller than that of a root circle of the engagement gear 61b. The pushing roller 62a is positioned slightly apart from both of the engagement gear 61 b and the other (in this case, the lower) gear 22. As a result, slight clearances are formed between the pushing roller 62a and the engagement gear 61 b, as well as between the roller 62a and the other (in this case, the lower) gear 22, through which the unvulcanized rubber K can pass.

Additionally, at the other side of the lower pusher 62 in the axial direction, there is provided an engagement gear 62c on which a number of external teeth 62b in slidingly contact with the internal surface of the case 23 are formed, the external teeth 62a of the engagement gear 62c being engaged with the external teeth 24 of the one of the gears 22 (in this case, the lower gear) in the gear pump extruder 21. Meanwhile, at the other side in the axial direction of the upper pusher 61, there is provided a pushing roller 61c of which the outer circumference is constructed of a smooth circumferential surface and which has a diameter smaller than that of the root circle of the engagement gear 62c. The pushing roller 61c is positioned slightly apart from both of the engagement gear 62c and the other (in this case, the upper) gear 22. As a result, slight clearances are formed between the pushing roller 61 c and the engagement gear 62c, as well as between the roller 61c and the other (in this case, the upper) gear 22, through which the unvulcanized rubber K can pass.

When the engagement gears 61b, 62c are driven to rotate at the constant velocity in the mutually opposite directions by applying the driving force from the gears 22 engaging with the gears 61 b, 62c in the gear pump extruder 21, thereby operating the engagement gear pump 60, special driving means for operating the gear pump 60 is not required. Note that in the present example, the gears in which tooth traces thereof incline with respect to the axial direction, namely helical gears are used as the gears 22 and the engagement gears 61b, 62c; however, spur gears in which the tooth traces thereof are parallel to the axial direction may also be used.

The feed rollers 41 are rotatably accommodated to rearward of the pushing gear pump 60 and at the rear end portion of the case 23. In this case, there is integrally formed the pushing means 64 including the gear pump extruder 21, the pushing gear pump 60 (engagement-type gear pump), and the feed rollers 41 by accommodating in the case 23 the gears 22, the engagement gears 61 b, 62c, and the feed rollers 41; however, the gear pump extruder 21, the pushing gear pump 60, and the feed rollers 41 may be separately provided by accommodating the gears 22 and the engagement-type gears 61b, 61c in the case 23 while at the same time having a bracket provided at the rear end of the case 23 or the case support the feed rollers 41 so as to engage the gears 22 with the engagement gears 61b, 62c, respectively.

When the feed rollers 41 rotate, the strip-shaped body Z kept heated is pulled between the feed rollers 41 without any change (remaining with the rollers 41 extruded from the heater 17) to pass between the rollers 41, and thereafter pushed into a supply opening 67 as well as the engagement gears 61b, 61c formed between the feed rollers 41 and the pushing gear pump 60 at the upstream side of the pushing gear pump 60 as the unvulcanized rubber K while at the same time being pressurized and turned into the shapeless state.

Afterward, the shapeless unvalcanized rubber K supplied to the supply opening 67 is pulled in due to opposite rotations of the pushers 61, 62, and passes between the engagement gear 61b and the pushing roller 62a as well as between the engagement gear 62c and the pushing roller 61 c, and thereafter, pushed into the supply opening 68 formed between the gear pump extruder 21 and the pushing gear pump 60 at the upstream side of the extruder 21 while at the same time being pressurized. At this time, the external teeth 61b, 62b are formed on outer circumferences of the engagement gears 61b, 62c, respectively, so that the unvulcanized rubber K is surely pulled and pushed therein. Sequentially, the unvulcanized rubber K passes between the pushing rollers 61 c, 62a and the gears 22, and thereafter is charged between the adjacent external teeth 24 and the internal surface of the case 23, and forwardly transported, in the same manner as the above-mentioned.

As mentioned above, when the pushing gear pump 60 rotates at the constant velocity in the opposite directions and is constructed of the engagement-type gear pump provided with the engagement gears 61 b, 61 c and the pushing rollers 61c, 62a, in addition to the effect which the pushing gear pump 37 exerts as explained in the first example, connection by means of external gears, a chain and the like is not required, and a structure of the gear pump 60 is small-sized and simple, and accordingly the gear pump 60 can be inexpensively manufactured, and at the same time an arrangement of the rollers 61 c, 62a allows to further improve biting capability (pull-in capability) and to stably push the unvulcanized rubber K into the gears 22 in the gear pump extruder 21, and this makes it possible to improve extrusion accuracy by means of the extruder 21. Depending on circumstances, the feed rollers 41 can be omitted. Thus, the pushing gear pump 60 preferably employs the engagement-type gear pump like the present second example rather than the pushing gear pump 37 explained in the first example. It is noted that other construction and operations are the same as those in the first example.

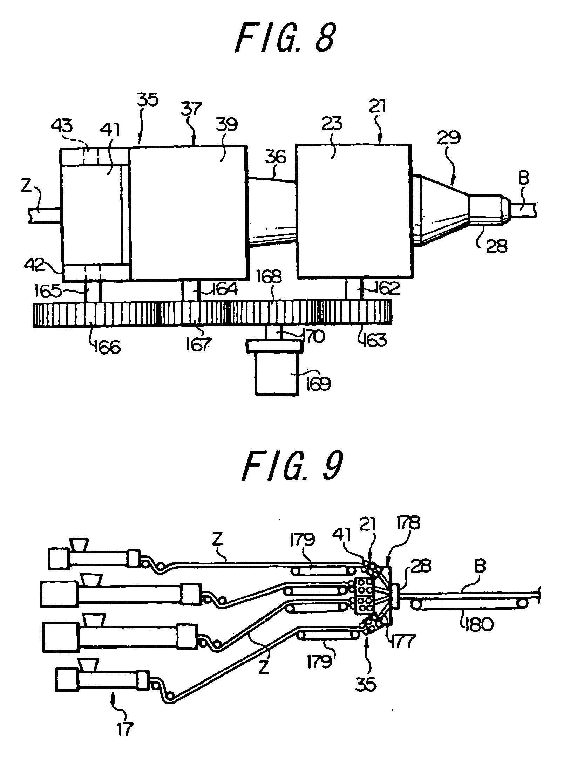

FIG. 8 is a view showing a third example of the present invention. In the present example, the motors 31, 48, and 50 in the first example are omitted, and an external gear 163 is fixed to the leading edge of a rotation shaft 162 of the gears 22. Further, an external gear 167 engaging with an external gear 166 which is fixed to the leading edge of a rotation shaft 165 of the feed rollers 41 is fixed to the leading edge of a rotation shaft 164 of the gears 38. An external gear 168 is placed between and engages with both of the external gears 163, 167, and an output shaft 170 of a motor 169 serving as the driving mechanism is fixed to the external gear 168.

When the motor 169 operates to drive to rotate its output shaft 170, the external gears 163, 166, and 167 rotate while dependently following the external gear 168. In this way, when the gear pump extruder 21, the feed rollers 41, and the pushing gear pump 37 are driven by distributedly imparting thereto the driving force from the one motor 169, the driving mechanism can be inexpensively manufactured and its installation space can be saved. In the present example, the unvulcanized rubber K is pulled in the gear pump 37 and the gear pump extruder 21 by adjusting a radius and the like of the respective external gears 163, 166, 167, and 168. It is noted that other construction and operations are the same as those in the first example.

FIG. 9 is a view showing a fourth embodiment of the present invention. In the present embodiment, there are arranged the plurality of, in this case four, heaters 17 in rows, and at positions spaced apart from the heaters 17, there are placed the pushing means 35 and the gear pump extruders 21 both having the same number as the heaters 17, in this case four. At the front end of the case 23 of the gear pump extruders 21, there is mounted a single pushing head 178 in which a plurality of, in this case four, extrusion passages 177 extending generally in the back-and-forth direction are formed.

After the unvulcanized rubber K is extruded by the respective heaters 17 as the strip-shaped body Z having different kinds, when fed into the pushing passages 177 in the gear pump extruders 21 through conveyors 179 and the pushing means 35, the rubber K is extruded through the die 28, thereby easily forming a member B that consists of a plurality of, in this case four, layers having a predetermined contour, in which each of the layers is made up of the different-type rubber, and exerts a strip shape in its entirety. Afterward, the formed member B is transported to a next step by a conveyor 180. Then, construction as mentioned-above allows the device for extruding the member B having the plurality of layers to be compact. It is noted that other construction and operations are the same as those in the first embodiment.

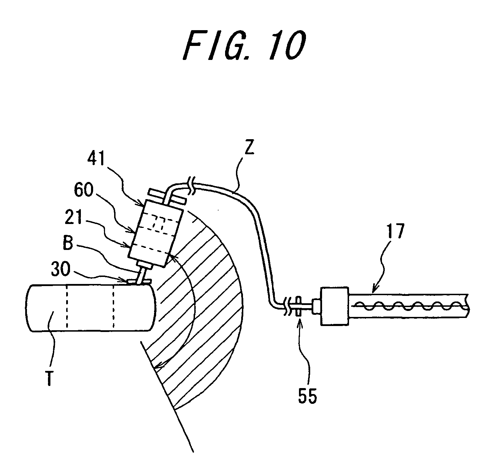

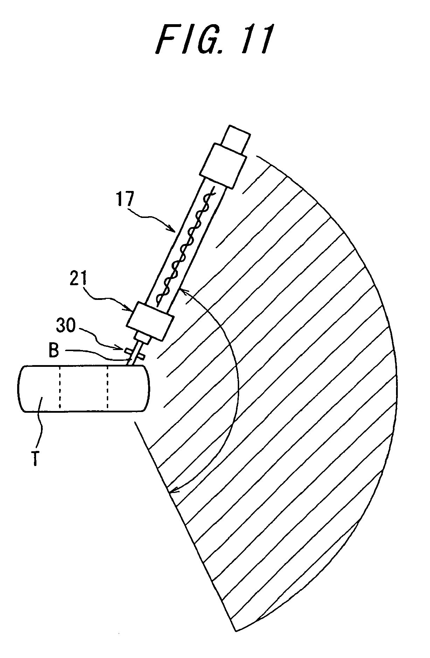

FIG. 10 is a schematic view showing a tire building apparatus using the extruding device for extruding the strip-shaped member according to the present invention. FIG. 11 is a schematic view showing a tire building apparatus using an extruding device for extruding strip-shaped member of a conventional technology. As illustrated, in the tire building apparatus using the extruding device for extruding the strip-shaped member of the present invention, the strip-shaped member B can be attached onto the tire intermediate body T while at the same time fixing the heater 17 having comparatively larger weight and moving only the extruder 21. Meanwhile, in the tire building apparatus using the extruding device for extruding the strip-shaped member of the conventional technology, the heater 17 is directly connected to the extruder 21, so that when attaching the strip-shaped member B onto the tire intermediary T, both of the heater 17 and the extruder 21 are required to pivot around the tire intermediate body T. Therefore, the tire building apparatus using the extruding device for extruding the strip-shaped member of the conventional technology requires more space for the pivot of the heater 17 and the extruder 21, and has larger weight, so that large pivoting power is required, and it is also difficult to secure lamination accuracy of the strip-shaped member B onto the intermediary T. On the contrary, in the tire building apparatus using the extruding device for extruding the strip-shaped member of the present technology, only the extruder 21 needs to pivot, so that those problems are not likely to occur. It is noted that FIG. 10 merely illustrates one example of the tire building apparatus to which the extruding device for extruding the strip-shaped member according to the present invention is applicable, and therefore the extruding device for extruding the strip-shaped member according to the present invention shall not be limited to the illustrated tire building apparatus and can be incorporated in various apparatuses within the scope of the appended claims.

In the above-mentioned examples, the pushing means 35 includes the gear pump 37 and the feed rollers 41, however, in the present invention, the pushing gear pump 37 may be omitted and the pushing means 35 may consist only of the feed rollers 41, and accordingly, the unvulcanized rubber K may be directly pushed into the gear pump extruder 21 without passing through the pushing gear pump 37. In this case, the pushing means 35 can also have a simple structure and be inexpensively manufactured.

In this regard, when the pushing means 35 is consisted only of the feed rollers 41 in this way, skidding and the like may occur between the strip-shaped body Z and the feed rollers 41, and the unvulcanized rubber K may be insufficiently charged in the gear pump extruder 21, and accordingly the extrusion accuracy of the strip-shaped member B may be lowered. In this state, in order for the feed rollers 41 to push the unvulcanized rubber K into the gear pump extruder 21, given that the downstream side of the pushing gear pump 41 is not connected to the gear pump extruder 21 and open to the atmosphere, the amount of rubber fed from the feed rollers 41 per unit time needs to be greater than the amount of rubber extruded per unit time from the gear pump extruder 21.

In the above-mentioned examples, by controlling the rotation speed of the respective motors 31, 48, and 50, or adjusting the radius of the respective external gears 163, 166, 167, and 168, the unvulcanized rubber K is pushed into the pushing gear pump and the gear pump extruder 21, however, the rubber K may be pushed by adjusting a radius of pitch circle, a module of the gears, or the radius of the feed roller in the pushing gear pump and the gear pump extruder.

Further, the above-mentioned examples employ the screw heater as the heater 17; however, in the present invention, a gear pump heater or a heating roller heater may be employed. Additionally, in the above-mentioned examples, there is used a pair of gears 38 that engage with each other as a portion of the pushing gear pump 37, however, in the present invention, there may be provided the two or more pairs of gears-in short, it is possible to employ any gear capable of pushing the unvulcanized rubber into the extruder (except the screw-type one).

In addition, in the above-mentioned example, the tread D is constructed by spirally winding the strip-shaped member B around the tire intermediate body T, or by merely winding the member B one round; however, in the present invention, a side tread may be constructed by winding the member B around the tire intermediate body, or, after being rewound in a roll-shape once, the member B may be wound off when needed, and be fed to the tire intermediate body. Further, in the present invention, the strip-shaped body Z may be hung around a cooling roll between the heater and the pushing means, and accordingly, be forcibly cooled. Furthermore, in the above-mentioned examples, extruded from the gear pump extruder 21 is the strip-shaped member B having a narrow width that forms the tread or the side tread by being spirally and windingly wound around the tire intermediate body T; however, in the present invention, the extruder may extrude a member having a wide width (e.g., generally one same length as that of a tread width) extruded in the shape of the tread and the like. In this case, the tread and the like can be formed only by performing the one-round attaching of the member around the tire intermediate body.

Next, a test example will be explained. In this test, there were prepared a Conventional device in which the gear pump extruder was directly connected to the leading edge of the screw heater; Example device 1 in which the gear pump extruder was placed at a position spaced apart from the screw type and the pushing means including the feed rollers and the pushing gear pump were placed in the vicinity of the upstream side of the extruder, as illustrated in FIG. 5; Example device 2 in which the pushing gear pump in the first example was omitted and the pushing means was composed of the feed rollers alone; and a Comparative device in which the feed rollers and the pushing gear pump in the first example were omitted while, in place thereof, the screw pushing means was placed.

Here, the screw heater in the Conventional device and the screw pushing means in the Comparative device respectively had an inner diameter of 120 mm; a value L/D in which each screw length L thereof divided by an outer diameter D was 4.8; each inner diameter of Example devices 1 and 2 as well as the Comparative device was 90 mm; and L/D of the respective screws was 14. Further, in each of the Conventional, Example, and Comparative devices, an aperture of the die through which the strip-shaped member was extruded had a width of 30 mm and a height of 2.5 mm.

Next, unvulcanized rubber made up of natural rubber as well as having the value of ML1 + 4 (100 deg. C) was loaded into the heater in each of the Conventional, Example, and Comparative devices with the rubber at normal temperature (in the cold state). Here, in each of Example devices 1 and 2 as well as the Comparative device, the heated (hot) unvulcanized rubber was extruded from the extruder in a form of the strip-shaped body, and thereafter the body was fed to the pushing means. Afterward, the strip-shaped body was extruded from each of the Example and Comparative devices, and there were measured the amount of the extruded strip-shaped member per a unit time (cm³/min), the extrusion accuracy (%), an extrusion temperature (deg. C), a rubber property, and whether or not premature crosslinking occurred.

Table 1 shows the results. In this Table 1, the extrusion accuracy is shown using a value generally called a variant coefficient Cv, which is obtained by dividing the variation in the extrusion amount by the mean extrusion amount and then centupling the product, as well as in a percentage, and the rubber property is obtained by performing a five-grade evaluation relative to a heat degree on the basis of border cracking, perforation and the like, and the larger its value, the more sufficiently the rubber is heated.

**[Table 1]**

| | Conventional device | Example device 1 | Example device 2 | Conventional device |
|---|---|---|---|---|
| Extrusion amount | 3,500 | 6,000 | 6,300 | 4,500 |
| Extrusion accuracy | 0.5 | 0.4 | 1.0 | 0.3 |
| Extrusion temperature | 115 | 114 | 113 | 115 |
| Rubber property | 3 | 5 | 4 | 5 |
| Presence or absence of premature crosslinking | Presence | Absence | Absence | Absence |

As apparent from Table 1, the Conventional device has smaller extrusion amount, lower heat degree, and worse rubber property due to temperature restriction; however, each of the Example devices has considerably improved extrusion amount and rubber property (heat degree) compared with those in Conventional device. Example device 2 has the considerably large extrusion accuracy of 1.0 %, and this is considered to be attributable to the reason that the unvulcanized rubber has been uncertainly charged in the gear pump extruder that employs only the feed rollers as the pushing means.

The present invention can be applied to an industrial field to which an extruding device for extruding a strip-shaped member, having a gear pump extruder, is used.

## Claims

1. A device for extruding a strip-shaped member (B) comprising:
a heater (17) for heating unvulcanized rubber and extruding the rubber as a strip-shaped body (Z);
a gear pump extruder (21) placed at a position spaced apart from the heater (17), and for extruding the fed unvulcanized rubber to form a strip-shaped member (B), and **characterised by**
a pushing means (35) placed adjacently to an upstream side of the gear pump extruder (21) and pulling the strip-shaped body extruded from the heater under atmospheric pressure as well as having passed through the air into the pushing means without any change to push the body in the gear pump extruder as shapeless unvulcanized rubber, and by
a festoon provided to the strip-shaped member stretched between the heater and the pushing means.

2. A device for extruding a strip-shaped member according to claim 1, wherein the pushing means (35) comprises a pair of feed rollers (41) which rotates at a constant velocity in mutually opposite directions and allows the strip-shaped body to pass therebetween.

3. A device for extruding a strip-shaped member according to claim 2, wherein the pushing means (35) is placed between the extruder (21) and the pair of feed rollers (41), and further comprises a pushing gear pump (37) for pushing the unvulcanized rubber having passed between the feed rollers into the extruder.

4. A device for extruding a strip-shaped member according to claim 3, wherein the pushing gear pump is an engagement-type gear pump (60) comprising an engagement gear (61b, 62c) for engaging with one of the gears in the extruder (21); and a pushing roller(61c, 62a) placed apart from the other gear in the extruder as well as from both of the engagement gears, the roller rotating at a constant velocity in a direction opposite to that of the engagement gears and having an outer circumference constructed of a smooth circumferential surface.

5. A device for extruding a strip-shaped member according to claim 4, wherein the engagement gear is driven to rotate by applying driving force from the gear in the extruder.

6. A device for extruding a strip-shaped member according to any of claims 3 to 5, wherein the extruder (21), the feed rollers (41) and the pushing gear pump (37) are driven by applying driving force from respective separate driving mechanisms (31, 50, 48) thereto.

7. A device for extruding a strip-shaped member according to any of claims 3 to 5, wherein the extruder (21), the feed rollers(41) and the pushing gear pump (37) are driven by applying driving force from one driving mechanism (169) thereto.

8. A device for extruding a strip-shaped member according to any of claims 1 to 7, wherein a festoon (56) is formed on a strip-shaped body stretched between the heater (17) and the pushing means (35).

9. A device for extruding a strip-shaped member according to any of clams 1 to 8, wherein the unvulcanized rubber to be loaded in the heater (17) is rubber having a value of ML1 + 4 (100 deg. C) within a range of 40 to 200.

## Patentansprüche

1. Vorrichtung zum Extrudieren eines bandförmigen Elements (B), die aufweist:
einen Heizkörper (17) für das Erhitzen von nicht vulkanisiertem Gummi und das Extrudieren des Gummis als einen bandförmigen Körper (Z);
einen Zahnradpumpenextruder (21), der in einer Position angeordnet ist, die vom Heizkörper (17) beabstandet ist, und für das Extrudieren des zugeführten nicht vulkanisiertem Gummis, um ein bandförmiges Element (B) zu bilden, und **gekennzeichnet durch**
ein Drückmittel (35), das angrenzend an eine stromaufwärts gelegene Seite des Zahnradpumpenextruders (21) angeordnet ist und den bandförmigen Körper, der aus dem Heizkörper unter atmosphärischem Druck extrudiert sowie **durch** die Luft bewegt wurde, in das Drückmittel ohne jegliche Veränderung zieht, um den Körper in den Zahnradpumpenextruder als formlosen nicht vulkanisierten Gummi zu drücken, und **durch**
eine Schleife, die für das bandförmige Element bereitgestellt ist, das zwischen dem Heizkörper und dem Drückmittel gedehnt wird.

2. Vorrichtung zum Extrudieren eines bandförmigen Elements nach Anspruch 1, bei der das Drückmittel (35) ein Paar Zuführwalzen (41) aufweist, die sich mit einer konstanten Geschwindigkeit in einander entgegengesetzten Richtungen drehen und gestatten, dass der bandförmige Körper dazwischen passiert.

3. Vorrichtung zum Extrudieren eines bandförmigen Elements nach Anspruch 2, bei der das Drückmittel (35) zwischen dem Extruder (21) und dem Paar der Zuführwalzen (41) angeordnet ist und außerdem eine drückende Zahnradpumpe (37) für das Drücken des nicht vulkanisierten Gummis aufweist, nachdem er zwischen den Zuführwalzen in den Extruder gelangt ist.

4. Vorrichtung zum Extrudieren eines bandförmigen Elements nach Anspruch 3, bei der die drückende Zahnradpumpe eine Eingriffszahnradpumpe (60) ist, die ein Eingriffszahnrad (61b, 62c) für einen Eingriff mit einem der Zahnräder im Extruder (21) und eine Druckwalze (61c, 62a) aufweist, die vom anderen Zahnrad im Extruder ebenso wie von beiden Eingriffszahnrädern entfernt angeordnet ist, wobei sich die Walze mit einer konstanten Geschwindigkeit in einer Richtung entgegengesetzt der der Eingriffszahnräder dreht, und die einen äußeren Umfang aufweist, der aus einer glatten Umfangsfläche konstruiert ist.

5. Vorrichtung zum Extrudieren eines bandförmigen Elements nach Anspruch 4, bei der das Eingriffszahnrad angetrieben wird, um sich durch Anwenden einer Antriebskraft vom Zahnrad im Extruder zu drehen.

6. Vorrichtung zum Extrudieren eines bandförmigen Elements nach einem der Ansprüche 3 bis 5, bei der der Extruder (21), die Zuführwalzen (41) und die drückende Zahnradpumpe (37) durch Anwenden einer Antriebskraft von jeweiligen separaten Antriebsmechanismen (31, 50, 48) darauf angetrieben werden.

7. Vorrichtung zum Extrudieren eines bandförmigen Elements nach einem der Ansprüche 3 bis 5, bei der der Extruder (21), die Zuführwalzen (41) und die drückende Zahnradpumpe (37) durch Anwenden einer Antriebskraft von einem Antriebsmechanismus (169) darauf angetrieben werden.

8. Vorrichtung zum Extrudieren eines bandförmigen Elements nach einem der Ansprüche 1 bis 7, bei der eine Schleife (56) auf einem bandförmigen Körper ausgebildet wird, der zwischen dem Heizkörper (17) und dem Drückmittel (35) gedehnt wird.

9. Vorrichtung zum Extrudieren eines bandförmigen Elements nach einem der Ansprüche 1 bis 8, bei der der nicht vulkanisierte Gummi, der in den Heizkörper (17) gefiillt werden soll, ein Gummi mit einem Wert von ML1+4 (100 Grad C) innerhalb eines Bereiches von 40 bis 200 ist.

## Revendications

1. Dispositif d'extrusion d'un élément en forme de bande (B), comprenant :
un dispositif de chauffage (17) pour chauffer du caoutchouc non vulcanisé et extruder le caoutchouc sous forme d'un corps en forme de bande (Z) ;
une extrudeuse à pompe à engrenages (21), agencée au niveau d'une position espacée du dispositif de chauffage (17) et destinée à extruder le caoutchouc non vulcanisé alimenté pour former un élément en forme de bande (B), et **caractérisé par**
un moyen de poussée (35), agencé près d'un côté amont de l'extrudeuse à pompe à engrenages (21) et tirant le corps en forme de bande extrudé à partir du dispositif de chauffage en présence de la pression atmosphérique, et ayant passé à travers l'air dans le moyen de poussée, sans aucun changement, pour pousser le corps dans l'extrudeuse à pompe à engrenages sous forme d'un caoutchouc non vulcanisé sans forme ; et par
une boucle fournie à l'élément en forme de bande étiré entre le dispositif de chauffage et le moyen de poussée.

2. Dispositif d'extrusion d'un élément en forme de bande selon la revendication 1, dans lequel le moyen de poussée (35) comprend une paire de rouleaux d'alimentation (41), tournant à une vitesse constante dans des directions mutuellement opposées et permettant le passage du corps en forme de bande entre eux.

3. Dispositif d'extrusion d'un élément en forme de bande selon la revendication 2, dans lequel le moyen de poussée (35) est agencé entre l'extrudeuse (21) et la paire de rouleaux d'alimentation (41), et comprenant en outre une pompe à engrenages de poussée (37) pour pousser le caoutchouc non vulcanisé ayant passé entre les rouleaux d'alimentation dans l'extrudeuse.

4. Dispositif d'extrusion d'un élément en forme de bande selon la revendication 3, dans lequel la pompe à engrenages de poussée est une pompe à engrenages du type à engagement (60), comprenant un engrenage à engagement (61b, 62c), destiné à s'engager dans l'un des engrenages dans l'extrudeuse (21) ; et un rouleau de poussée (61c, 62a), agencé séparément de l'autre engrenage dans l'extrudeuse ainsi que des deux engrenages à engagement, le rouleau tournant à une vitesse constante dans une direction opposée à celle des engrenages à engagement et ayant une circonférence externe construite à partir d'une surface circonférentielle lisse.

5. Dispositif d'extrusion d'un élément en forme de bande selon la revendication 4, dans lequel l'engrenage à engagement est entraîné en rotation en appliquant une force d'entraînement à partir de l'engrenage dans l'extrudeuse.

6. Dispositif d'extrusion d'un élément en forme de bande selon l'une quelconque des revendications 3 à 5, dans lequel l'extrudeuse (21), les rouleaux d'alimentation (41) et la pompe à engrenages de poussée (37) sont entraînés en y appliquant une force d'entraînement à partir de mécanismes d'entraînement séparés respectifs (31, 50, 48).

7. Dispositif d'extrusion d'un élément en forme de bande selon l'une quelconque des revendications 3 à 5, dans lequel l'extrudeuse (21), les rouleaux d'alimentation (41) et la pompe à engrenages de poussée (37) sont entraînés en y appliquant une force d'entraînement à partir d'un mécanisme d'entraînement (169).

8. Dispositif d'extrusion d'un élément en forme de bande selon l'une quelconque des revendications 1 à 7, dans lequel une boucle (56) est formée sur le corps en forme de bande étiré entre le dispositif de chauffage (17) et le moyen de poussée (35).

9. Dispositif d'extrusion d'un élément en forme de bande selon l'une quelconque des revendications 1 à 8, dans lequel le caoutchouc non vulcanisé devant être chargé dans le dispositif de chauffage (17) est un caoutchouc ayant une valeur de ML1 + 4 (100 degrés C) comprise dans un intervalle allant de 40 à 200.
